# EUROPÄISCHE PATENTANMELDUNG

(11) **EP 0 621 160 A2**
(43) Veröffentlichungstag der Anmeldung: **26.10.1994**
(21) Anmeldenummer: 94106052.7
(22) Anmeldetag: 19.04.1994
(51) Int. Cl.: B60R 21/26

(54) **Vorrichtung zum Befüllen eines Airbags**

(30) Priorität: 19.04.1993 DE 4312646
(71) Anmelder: HS Technik und Design Technische Entwicklungen GmbH, D-82234 Wessling (DE)
(72) Erfinder: Specht, Martin Dipl. Ing., D-82340 Feldafing (DE)
(74) Vertreter: Nöth, Heinz, Dipl.-Phys.

(57) **Zusammenfassung**

Eine Vorrichtung zum Befüllen eines Airbags mit einem gasdicht verschlossenen Aufbewahrungsbehälter (1), in welchem ein Füllgas (19) aufbewahrt wird, und einer Freigabeeinrichtung zum Öffnen des Ausbewahrungsbehälters (1) für die Freigabe des Füllgases in den Airbag bei überhöhter Fahrzeuggeschwindigkeitsänderung, wobei die Freigabeeinrichtung einen Treibgasgenerator (2) aufweist, der bei Zündung ein Betätigungsteil (3) durch das erzeugte Treibgas antreibt und wobei das Betätigungsteil an einem Behälterverschluß (4) angreift, der durch das angetriebene Betätigungsteil (3) geöffnet wird.

Das Füllgas kann aus mehreren Komponenten bestehen, und diese werden mittels eines schwer entzündbaren Treibgases aus getrennten Behältern in einen Mischraum (6) gedrückt. Das Füllgasgemisch wird dann im Mischraum (6) und im g.g.b., durch den erhöhten Druck des Treibgases, vorgefüllten airbag entzündet.

## Beschreibung

Die Erfindung betrifft eine Vorrichtung zum Befüllen eines Airbags mit einem gasdicht verschlossenen Aufbewahrungsbehälter, in welchem ein Füllgas aufbewahrt wird, und einer Freigabeeinrichtung zum Öffnen des Aufbewahrungsbehälters für die Freigabe des Füllgas in den Airbag bei überhöhter Fahrzeuggeschwindigkeitsänderung.

Aus der DE 42 13 265 A1 ist ein Treibgasgenerator bekannt, mit dessen gezündetem Treibmittelgas ein Airbag befüllt werden kann. Ferner sind Gasgeneratoren zum Aufblasen von Airbags bekannt (DE 28 24 701 C2, DE 29 15 202 B2, DE 39 39 021 C1 und DE 40 05 871 A1), bei denen in einem ringförmigen Behälter ein Feststofftreibmittel in einem Reaktionsraum angeordnet ist. Das Feststofftreibmittel wird zur Erzeugung eines Treibgases mittels einer zentral angeordneten Zündeinrichtung über Zündkanäle gezündet, und das Treibmittelgas, welches sich im Reaktionsraum bildet, entweicht durch zunächst abgedeckte Auslaßöffnungen und durch einen Filter zur Befüllung des Airbags. Hierbei werden nach dem Auslösen der Zündeinrichtung verschiedene Prozeßstufen durchlaufen, nämlich Anzünden des in fester Form vorliegenden Treibmittels und Entwickeln eines ausreichenden Treibmitteldruckes im Reaktionsraum zum Öffnen der verschlossenen Auslaßöffnungen, bis der Airbag durch das erzeugte Treibgas befüllt wird. Auch bei dem aus der US 4,116,466 bekannten Treibgasgenerator, in welchem ein von einem Zünder ausgelöstes Anzündmittel (Booster) und mehrere Feststofftreibmittel zur Erzeugung des Treibmittelgases übereinander in einer Reaktionskammer angeordnet sind, erfolgt zunächst die Anzündung des Treibmittels und der Aufbau eines ausreichenden Treibgasdruckes im Reaktionsbehälter bei noch geschlossenen Auslaßöffnungen, bis das Treibgas durch die dann geöffneten Auslaßöffnungen zum Befüllen des Airbags ausströmt.

Aufgabe der Erfindung ist es, eine Vorrichtung der eingangs genannten Art zu schaffen, welche bei kompaktem Aufbau ein rasches und sicheres Befüllen des Airbaginnenraums gewährleistet.

Diese Aufgabe wird erfindungsgemäß dadurch gelöst, daß die Freigabeeinrichtung einen Treibgasgenerator aufweist, der bei Zündung ein Betätigungsteil durch das erzeugte Treibgas antreibt, und daß das Betätigungsteil an einen Behälterverschluß angreift, wobei das angetriebene Betätigungsteil den Behälterverschluß öffnet.

Der Aufbewahrungsbehälter ist bevorzugt ringförmig ausgebildet, wobei der Treibgasgenerator in der Ringöffnung des Aufbewahrungsbehälters angeordnet ist.

Der Behälterverschluß kann als durch das Betätigungsteil aufreißbare Bördelung, insbesondere im Bereich zwischen einem Rand der Ringinnenwand an der dem Airbag zugekehrten Seite des Aufbewahrungsbehälters und einem den Aufbewahrungsbehälter abdeckenden Deckelteil gebildet sein.

Der Treibgasgenerator kann in der Weise ausgebildet sein wie er in der DE 42 13 265 A1 beschrieben ist. Ein derartiger Treibgasgenerator besitzt einen Gehäusemantel, der in radialer Richtung durch das gezündete Treibgas expandierbar ist. Hierdurch wird gewährleistet, daß der Gehäusemantel des Treibgasgenerators gegen die Ringinnenwand des ringförmigen Aufbewahrungsbehälters durch das gezündete Treibgas andrückbar ist, wodurch die Fixierung des Treibgasgenerators im Behälterinnenraum während des Aufblasens des Airbags eine zusätzliche Fixierung erhält.

Das Füllgas wird mit Überdruck (30 bis 35 bar) im Aufbewahrungsbehälter, der druckdicht abgeschlossen ist, gehalten. Das Füllgas kann in Gasform, jedoch bevorzugt in flüssiger Phase, im Behälter aufbewahrt werden. Es können auch mehrere Komponenten (z.B. CO₂, Butan und Lachgas) eines Füllgases in getrennten Kammern des Aufbewahrungsbehälters oder in betrennten Behältern in Bereitschaft gehalten werden.

Beim Öffnen des Behälters durch das angetriebene Betätigungsteil, das nach Art eines Ringdeckel-Kronenverschlusses den bevorzugt als Bördelung ausgebildeten Behälterverschluß aufreißt, vermischt sich das Füllgas, welches sich bei seiner Ausdehnung abkühlt, mit dem heißen Treibgas des Treibgenerators bzw. vermischen sich die Komponenten des Füllgases in einem Mischraum. Dieser Mischraum bildet sich als durch die Wirkung des Treibgasgenerators expandierter Mischraum um den Behälterverschluß, welcher an dem dem Airbag zugekehrten Innenrand des ringförmigen Behälters vorgesehen sein kann. Dieser Mischraum kann bei der Ausführungsform dadurch vorgebildet sein, daß er zwischen dem eingebördelten Deckelteil und einem Düsenboden mit in den Airbaginnenraum gerichteten Austrittsdüsen gebildet wird. Dieser Düsenboden kann durch den Antriebsdruck des vom Treibgasgenerator gebildeten Treibgases aufweitbar sein. Der Mischraum kann auch durch axiales Verschieben eines Deckelteils gegenüber dem Aufbewahrungsbehälter gebildet werden, wobei die axiale Verschiebung durch den gezündeten Gasgenerator bewirkt wird. Radial nach außen gerichtete Austrittsdüsen in einem den Mischraum umgebenden Mantel am Deckelteil ermöglichen den Austritt des Füllgasgemisches, das im Mischraum oder auch außerhalb des Mischraumes gezündet werden kann. Das den Mischraum umgebende Deckelteil bildet für den Airbag die Aufblaseinrichtung. Zur Übertragung des vom Treibgasgenerator erzeugten Treibgasdruckes auf die zu bewegenden Teile beim Öffnen des Behälters und/oder der Bildung des Mischraumes kann ein Kolben vorgesehen sein, der in axialer Richtung des ringförmigen Behälters durch das Treibgas bewegbar ist. Durch diesen Kolben kann auch das Betätigungsteil zum Aufreißen des Behälterverschlusses, insbesondere der Bördelung, ausgenützt werden.

Der Treibgasdruck kann ferner in der Weise ausgenützt werden, daß durch entsprechende Umleitung von unten her, d.h. vom Behälterboden her, auf das Füllgas bzw. auf die Füllgaskomponenten in den getrennten Kammern ein Druck ausgeübt wird, durch welchen das Füllgas aus dem Behälterinnern durch den geöffneten Verschluß in den Mischraum und durch die Austrittsdüsen des Mischraumes gedrückt wird.

Anhand der Figuren wird an einem Ausführungsbeispiel die Erfindung noch näher erläutert. Es zeigt:
- Figur 1:: ein Ausführungsbeispiel der Airbagbefüllvorrichtung in Ruhezustand;
- Figur 2:: das in Figur 1 dargestellte Ausführungsbeispiel beim Befüllen des Airbags;
- Figur 3:: ein weiteres Ausführungsbeispiel in Seitenansicht;
- Figur 4:: einen Schnitt entlang der Schnittlinie IV-IV in Fig. 3;
- Figur 5:: ein drittes Ausführungsbeispiel der Erfindung;
- Figur 6:: eine schnittbildliche Darstellung in Seitenansicht eines vierten Ausführungsbeispiels der Erfindung; und
- Figur 7:: eine schnittbildliche Darstellung des Ausführungsbeispiels in der Fig. 6 entlang einer Schnittlinie VII-VII.

Das dargestellte Ausführungsbeispiel besitzt einen ringförmigen Aufbewahrungsbehälter 1, in welchem ein Füllgas 19 mit einem Druck von ca. 30 bis 35 bar druckdicht aufbewahrt wird. Das Füllgas 19 ist in bevorzugter Weise als Flüssiggas im Behälterinnenraum vorhanden und hat eine für die Befüllung von Airbags bekannte Zusammensetzung. Der Behälter 1 besitzt an einem dem nicht näher dargestellten Airbag zugekehrten Rand seiner Ringinnenwand 13 einen umlaufenden Behälterverschluß 4 in Form einer Bördelung. Der umgebördelte Rand des Behälters erfaßt einen umgebogenen eingebördelten Rand eines Deckelteils 5. Auf diese Weise wird ein gasdichter Abschluß an der Innenseite des ringförmigen Aufbewahrungsbehälters 1 erreicht. Außen wird ebenfalls durch eine Bördelung 15 das Deckelteil 5 gasdicht mit dem ringförmigen Behälter 1 verbunden. Diese Bördelung kann gebildet sein durch ein Blech 16, welches ferner als Düsenboden 10, dessen Funktion im einzelnen noch erläutert wird, ausgebildet sein kann. An den innenliegenden als Bördelung ausgebildeten Behälterverschluß 4 greift ein Betätigungsteil 3 nach Art eines Rinddeckel-Kronenverschlusses an. Das Betätigungsteil 3 ist ebenfalls ringförmig aus einem stärkeren Material als die beiden gebördelten Ränder des Deckelteils 5 und der Ringinnenwand 13 des Aufbewahrungsbehälters 1 ausgebildet. Das Betätigungsteil 3 besitzt ein ringförmiges in die Bördelung des Behälterverschlusses 4 eingreifendes Eingriffsteil 8.

In den Ringinnenraum des Aufbewahrungsbehälters 1 ist ein Gasgenerator 2 eingesetzt. Der Gasgenerator 2 kann in herkömmlicher Weise ausgebildet sein. Er besitzt einen Zünder, der elektrisch oder mechanisch gezündet werden kann. Beim dargestellten Ausführungsbeispiel erfolgt die Zündung über eineelektrische Leitung 17. Der Gasgenerator 2 besitzt ferner ein im zylindrisch geformten Behälter enthaltenes Treibmittel 18. An der dem Airbag zugekehrten Seite besitzt der Gasgenerator einen Kolben 9. Dieser Kolben 9 kann durch das gezündete Treibmittel 18 in axialer Richtung, d.h. längs einer Achse A des ringförmigen Aufbewahrungsbehälters 1, angetrieben werden.

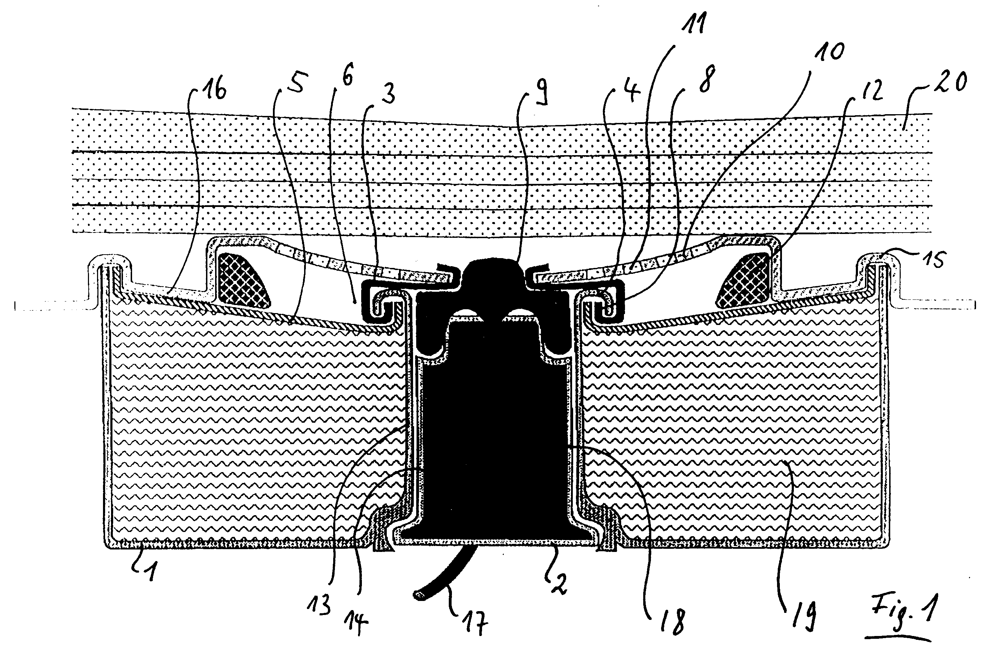

Der Kolben 9 greift in eine mittlere Öffnung des Betätigungsteiles 3 ein. Ferner greift er in eine mittlere Öffnung des Düsenbodens 10 ein. Der Düsenboden 10 besitzt Düsenaustrittsöffnungen 11, die in einen Airbaginnenraum 7 gerichtet sind. Bei dem in der Figur 1 dargestellten Zustand des Ausführungsbeispiels befindet sich die Airbagfüllvorrichtung im Ruhezustand. Ein Airbag 20 liegt im gefalteten Zustand auf der Seite des Düsenbodens 10 auf, wobei die Düsenöffnungen 11 mit dem Airbaginnenraum 7 in Verbindung stehen. Der Düsenboden 10, welcher von dem mit dem Aufbewahrungsbehälter 1 durch die Bördelung 15 verbundenen Blech 20 gebildet wird, ist im Bereich eines Versteifungsringes 12 durch den angetriebenen Kolben 9 ausweitbar ausgebildet. Wenn das Treibmittel 18 gezündet wird, bewegt sich der Kolben 9 in Richtung der Achse A und weitet den Düsenboden 10 aus, wie es in Figur 2 dargestellt ist. Gleichzeitig wird das Betätigungsteil 3 ebenfalls axial bewegt, so daß der als Bördelung ausgebildete Behälterverschluß 4 aufgerissen wird und das eingeschlossene Füllgas expandieren kann.

Innerhalb des Düsenbodens 10 wird im Bereich des aufgerissenen Behälterverschlusses 4 ein ringförmiger Mischraum 6 gebildet, in welchem die heißen aus dem Gasgenerator 2 austretenden Treibmittelgase mit dem aufgrund der Expansion abgekühlten Füllgas sich vermischen. Dieser Mischraum 6 ist im Ruhezustand bereits vorgebildet in dem Bereich zwischen dem Deckelteil 5 und dem Düsenboden 10.

Der Mischraum 6 wird, wie die Figur 2 zeigt, bei geöffnetem Behälterverschluß 4 nach außen hin begrenzt durch den aufgeweiteten Deckelteil 5, welcher sich innen an den Versteifungsring 12 anlegt.

Durch den aufgeweiteten Düsenboden 10, der im wesentlichen vorgebildet wird zwischen dem Versteigungsring 12, strömt das Gemisch aus dem Treibmittelgas 18 und dem Füllgas 19 durch die Düsenöffnungen 11 des aufgeweiteten Düsenbodens 10 in Form eines Gaskegels in den Airbag aufweitende Strömungsrichtungen, wie das im einzelnen aus der Figur 2 zu ersehen ist.

Zur sicheren Fixierung des Treibgasgenerators 2 im Innenraum des Aufbewahrungsbehälters 1 kann der Gehäusemantel 14 des Treibgasgenerators radial expandierbar sein, wie das in der DE 42 13 265 A1 beschrieben ist. Auf diese Weise wird erreicht, daß der Gehäusemantel 14 des Treibgasgenerators gegen die Ringinnenwand 13 des Aufbewahrungsbehälters 1 fest angedrückt wird, so daß eine zusätzliche Fixierung des Treibgasgenrators 2 am Aufbewahrungsbehälter 1 während des Befüllens des Airbags erreicht wird.

Der Treibgasgenerator 2 kann auch eine Treibmittelanorndung in der Weise besitzen, wie sie in der DE 42 28 696 A1 beschrieben ist, bei welcher das Treibgas in mindestens zwei Stufen für den Antrieb des Kolbens 9 mit unterschiedlicher Antriebswirkung freigesetzt wird, wobei die erste Stufe gegenüber den nachfolgenden Stufen die geringste Antriebswirkung hat. Auf diese Weise wird eine zunächst anschiebende Wirkung auf den Kolben 9 ausgeübt und in der nachfolgenden Stufe bzw. den nachfolgenden Stufen die volle Antriebswirkung ausgeübt.

Bei dem in den Figuren 3 und 4 dargestellten Ausführungsbeispiel wird der Mischraum 6 gebildet durch einen in axialer Richtung verschiebbaren Deckel 21. Die Verschiebung erfolgt aufgrund der Wirkung des vom Treibgasgenerator 2 erzeugten Treibgasdruckes. Der Treibgasdruck kann dabei durch den Kolben 9 gleichzeitig mit dem Öffnen des Behälterverschlusses 4 zur Deckelverschiebung ausgenützt werden. Der Deckel 21 besitzt einen den Mischraum 6 umgebenden Mantel 22. Im Mantel 22 sind die Austrittsdüsen 11 angeordnet. Bei diesem Ausführungsbeispiel sind die Austrittsdüsen 11 in radialer Richtung ausgerichtet. Im Ruhezustand ist der Deckel 21 (ausgezogene Linien) auf den Aufbewahrungsbehälter 1 aufgesetzt, wobei der Mantel 22 den oberen Teil des Aufbewahrungsbehälters 1 umfaßt. Am Mantel 22 ist ein Anschlag 23 vorgesehen, der bei axial ausgefahrenem Deckel 21 (strichlierte Darstellung) zur Bildung des Mischraumes 6 gegen einen Anschlag 24 am Aufbewahrungsbehälter anliegt.

Der Aufbewahrungsbehälter 1 besitzt drei voneinander abgetrennte Kammern für Füllgaskomponenten, z.B. CO₂, Butan und Lachgas. In der schnittbildlichen Darstellung des Aufbewahrungsbehälters 1 in der Figur 4 sind die drei Kammern 25, 26 und 27 zu ersehen. Die Kammern werden durch radial sich erstreckende Trennwände 28, 29 und 30 gebildet.

Um die in den Kammern 25, 26 und 27 vorhandenen Füllgaskomponenten rasch aus den Kammern bei geöffnetem Behälterverschluß 4 in den Mischraum 6 zu transportieren, kann der vom Treibgasgenerator 2 erzeugte Treibgasdruck auf ein in axialer Richtung in jeder Kammer nach oben verschiebbares Ausdehnungsmedium 31, z.B. in Form einer aufblasbaren Hülle oder eines axial nach oben verschiebbaren Kolbens zur Einwirkung gebracht werden. Ein Teil der Treibgase wird dabei in Richtung der Pfeile 32 vom Treibgasgenerator 2 ausgehend nach unten in Richtung zum Boden der jeweiligen Kammern 25, 26 und 27 hin umgelenkt.

Auch bei dem in den Figuren 1 und 2 dargestellten Ausführungsbeispiel können mehrere abgetrennte Kammern für unterschiedliche Füllgaskomponenten vorgesehen sein.

Sowohl beim Ausführungsbeispiel der Figuren 1 und 2 als auch beim Ausführungsbeispiel der Figuren 3 und 4 bildet der vom Düsenboden 10 bzw. dem axial ausgeschobenen Deckel 21 umfaßte Mischraum die Aufblaseinrichtung für den Airbag 20.

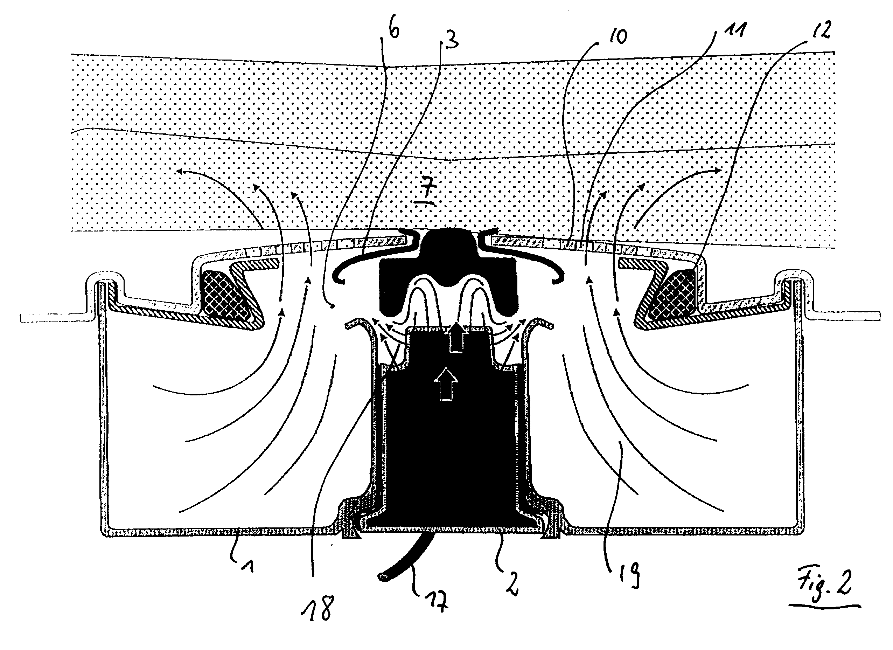

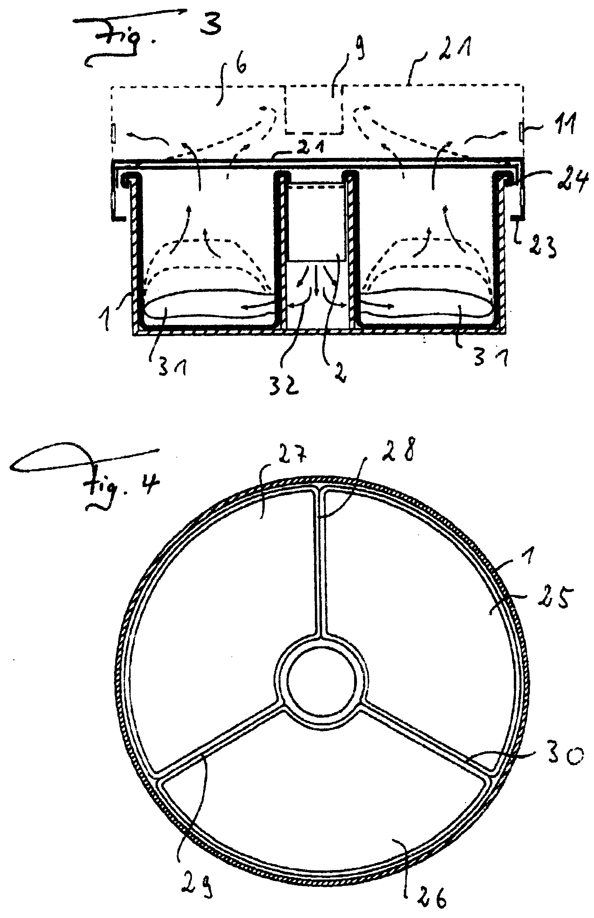

In der Figur 5 ist ein weiteres Ausführungsbeispiel gezeigt, bei welchem radial gerichtete Austrittsdüsen 11 in dem den Mischraum 6 umgebenden Teil 10, welcher durch den Kolben 9 expandiert wird, gebildet sind. Sowohl bei diesem Ausführungsbeispiel als auch bei den anderen Ausführungsbeispielen erfolgt bei der axialen Verschiebung des Kolbens 9 und dem Expandieren des Mischraumes 6 ein Herausdrücken des gefalteten Airbags 20 und u.U. eine Vorfüllung des Airbags.

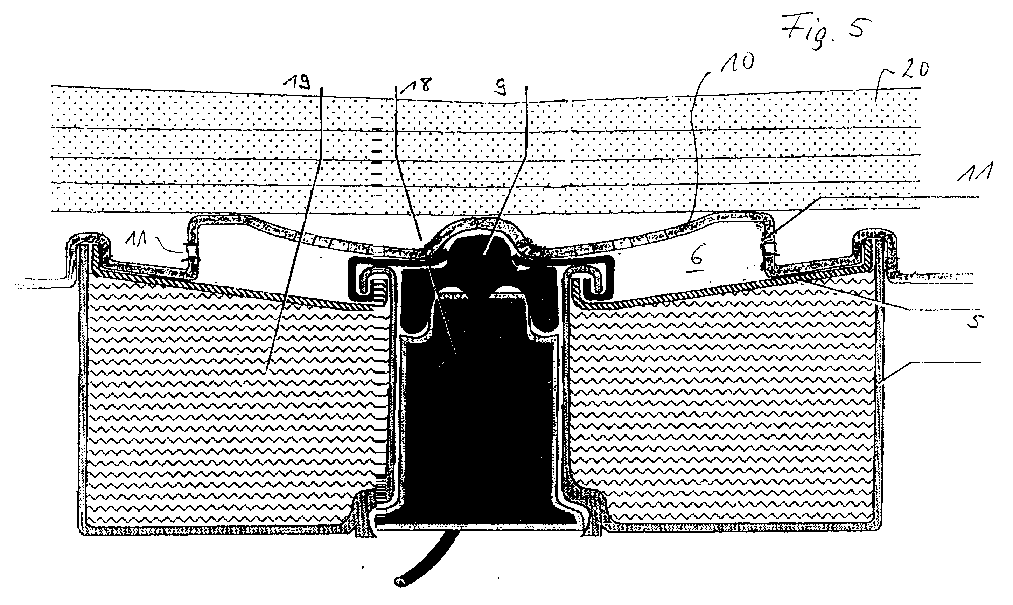

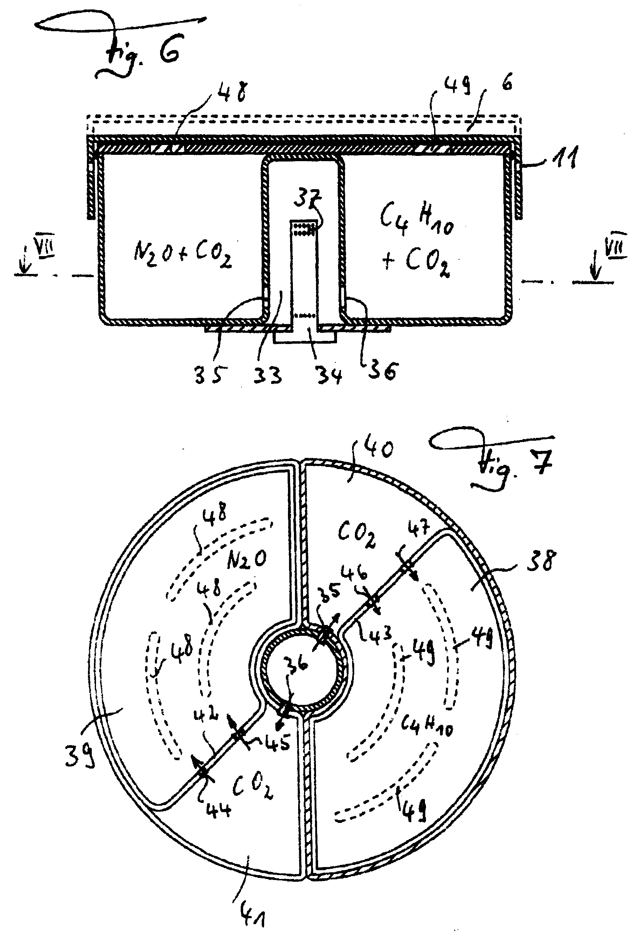

Ein weiteres Ausführungsbeispiel ist in den Figuren 6 und 7 dargestellt. Bei diesem Ausführungsbeispiel ist der Gasgenerator 2 in der Weise ausgebildet, daß in einem abgeschlossenen Raum 33 eine zweistufige Zündeinrichtung 34 angeordnet ist. Der abgeschlossene Raum 33 kann angefüllt sein mit einem schwer entzündbaren bzw. unbrennbaren Gas, beispielsweise Kohlendioxyd (CO₂). In der Wandung des abgeschlossenen Raumes 33 sind Ventile 35 und 36 vorgesehen, welche sich dann öffnen, wenn im abgeschlossenen Raum 33 ein bestimmter Druck durch Druckerhöhung erreicht wird. Diese Druckerhöhung läßt sich erreichen durch Erwärmen des im abgeschlossenen Raum enthaltenen schwer entzündbaren Gases. Diese Erwärmung kann erreicht werden durch Zünden einer ersten Zündstufe 37.

Die bei einem bestimmten Druck sich öffnenden Ventile 35 und 36 können direkt in abgeschlossene Behälter münden, in denen Füllgaskomponenten eines zu entzündenden Füllgases enthalten sind. Diese Behälter umschließen die beiden abgeschlossenen Räume 38 und 39. Als Füllgaskomponenten sind in den abgeschlossenen Räumen 38 und 39 beispielsweise N₂O und C₄H₁₀ enthalten.

Es ist jedoch auch möglich, daß der abgeschlossene Raum 33 über die sich öffnenden Ventile 35 und 36 mit zwei weiteren im Normalfall abgeschlossenen Räumen 40 und 41 kommuniziert. In den Räumen 40 und 41 ist ebenfalls ein schwer entzündbares bzw. unbrennbares Gas, beispielsweise CO₂ enthalten. Beim dargestellten Ausführungsbeispiel sind in Trennwänden 42 und 43 weitere Ventile 44 bis 47 enthalten. Auch diese Ventile werden durch den erhöhten Druck, welcher im CO₂-Gas aufgebaut wird, geöffnet, so daß der Druck, welcher durch Zündung der ersten Zündstufe 37 in den Räumen 33, 40 und 41 aufgebaut wird, ebenfalls in den abgeschlossenen Räumen 38 und 39 entsteht.

Die im Normalfall verschlossenen Behälterräume 38 und 39 mit dem C₄H₁₀-Gas und dem N₂O-Gas besitzen ebendann öffnen, wenn der durch die erste Zündstufe 37 bewirkte Druckanstieg in den Räumen 38 und 39 sich aufgebaut hat. Beim Öffnen der Ventile 48 und 49 wird der Deckel 21, wie im Ausführungsbeispiel der Figuren 3 und 4, axial nach oben verschoben, so daß der Mischraum 6 gebildet wird. Aufgrund des von der ersten Zündstufe 37 erzeugten Druckes treibt das CO₂-Gas die Füllgaskomponenten C₄H₁₀ und N₂O durch die geöffneten Ventile 48 und 49 in den Mischraum 6. Beim Expandieren des Mischraumes 6 wird auch der Airbag 20 herausgedrückt und teilweise gefüllt. Zur Zündung der gemischten Gase kann eine zweite Zündstufe 50 vorgesehen sein, mit deren Hilfe das Gasgemisch durchgezündet wird. Die zweite Zündung kann jedoch auch im Mischraum 6 oder außerhalb des Mischraumes 6 erfolgen.

Beim Ausführungsbeispiel der Figuren 6 und 7 bildet das schwer entzündbare bzw. unbrennbare Gas das Treibmittel bzw. Transportmittel zum Expandieren des Mischraumes 6 zum Transport der Füllgaskomponenten und zum Vorfüllen des teilweise herausgedrückten Airbags. Auf diese Weise gewinnt man ferner eine Steuerung der Flammfront des entzündeten Füllgases.

Die Ventile 35, 36, 44 bis 47 und 48, 49 können durch eingeformte Ventilsicken gebildet sein. Es ist hierdurch möglich, einen bestimmten Druck voreinzustellen, bei welchem diese Ventile für das Mischen und anschließende Entzünden der Füllgase geöffnet werden. Mit Hilfe von eingeformten Ventilsicken läßt sich die Voreinstellung des überhöhten Druckes im CO₂-Gas, bei welchem die oben bechriebene Airbagfüllung initiiert wird, mit einer Genauigkeit von 2 bar wählen.

## Patentansprüche

1. Vorrichtung zum Befüllen eines Airbags mit einem gasdicht verschlossenen Aufbewahrungsbehälter, in welchem ein Füllgas aufbewahrt wird, und einer Freigabeeinrichtung zum Öffnen des Aufbewahrungsbehälters für die Freigabe des Füllgases in den Airbag bei überhöhter Fahrzeuggeschwindigkeitsänderung,
dadurch **gekennzeichnet,**
daß die Freigabeeinrichtung (2, 3) einen Treibgasgenerator (2) aufweist, der bei Zündung ein Betätigungsteil (3) durch das erzeugte Treibgas antreibt, und daß das Betätigungsteil (3) an einen Behälterverschluß (4) angreift, der durch das angetriebene Betätigungsteil (3) geöffnet wird.

2. Vorrichtung nach Anspruch 1, dadurch gekennzeichnet, daß der Aufbewahrungsbehälter (1) ringförmig ausgebildet ist und der Treibgasgenerator (2) in der Ringöffnung befestigt ist.

3. Vorrichtung nach Anspruch 1 oder 2, dadurch gekennzeichnet, daß der Behälterverschluß (4) als durch das Betätigungsteil (3) aufreißbare Bördelung ausgebildet ist.

4. Vorrichtung nach Anspruch 2 und 3, dadurch gekennzeichnet, daß die Bördelung zwischen einem Rand der Ringinnenwand (13) des Aufbewahrungsbehälters (1) und einem den Aufbewahrungsbehälter (1) abdeckenden Deckelteil (5) gebildet ist.

5. Vorrichtung nach einem der Ansprüche 1 bis 4, dadurch gekennzeichnet, daß durch den gezündeten Treibgasgenerator (2) um den geöffneten Behälterverschluß (4) ein expandierter Mischraum (6) mit Austrittsdüse (11) gebildet ist.

6. Vorrichtung nach Anspruch 5, dadurch gekennzeichnet, daß in den Mischraum (6) mehrere getrennt im Aufbewahrungsbehälter (1) enthaltene Komponenten des Füllgases geleitet sind.

7. Vorrichtung nach Anspruch 5 oder 6, dadurch gekennzeichnet, daß das Füllgasgemisch nach Austritt durch die Austrittsdüsen (11) gezündet ist.

8. Vorrichtung nach Anspruch 5 oder 6, dadurch gekennzeichnet, daß das Füllgasgemisch im Mischraum (6) gezündet ist.

9. Vorichtung nach einem der Ansprüche 1 bis 5, dadurch gekennzeichnet, daß bei geöffnetem Behälterverschluß (4) das Treibgas und das Füllgas zum Vermischen in einen Mischraum (6) geleitet sind.

10. Vorrichtung nach einem der Ansprüche 5 bis 9, dadurch gekennzeichnet, daß der Mischraum (6) durch ein vom gezündeten Gasgenerator (2) gegenüber dem Aufbewahrungsbehälter (1) axial verschobenes Deckelteil (21) gebildet ist.

11. Vorrichtung nach einem der Ansprüche 1 bis 5, dadurch gekennzeichnet, daß ein durch den Treibgasgenerator (2) aufweitbarer Düsenboden (10) mit Austrittsdüsen (11) zwischen Behälterverschluß (4) und Airbaginnenraum (7) vorgesehen ist.

12. Vorrichtung nach einem der Ansprüche 5 bis 11, dadurch gekennzeichnet, daß der Mischraum (6) radial nach außen gerichtete Austrittsdüsen (11) aufweist.

13. Vorrichtung nach einem der Ansprüche 5 bis 11, dadurch gekennzeichnet, daß das Füllgas vom geöffneten Aufbewahrungsbehälter (1) durch die Austrittsdüsen (11) in kegelförmiger Strömung in den Airbaginnenraum (7) geleitet ist.

14. Vorrichtung nach einem der Ansprüche 1 bis 13, dadurch gekennzeichnet, daß das Betätigungsteil (3) ein umlaufendes, in die Bördelung eingesetztes Eingriffsteil (8) aufweist.

15. Vorrichtung nach einem der Ansprüche 1 bis 14, dadurch gekennzeichnet, daß das Betätigungsteil (3) durch einen vom Treibgasgenerator (2) in axialer Richtung des Aufbewahrungsbehälters (1) angetriebenen Kolben (9) antreibbar ist.

16. Vorrichtung nach einem der Ansprüche 1 bis 15, dadurch gekennzeichnet, daß das Deckelteil (5) sich zwischen einem sich um die Achse (A) des Aufbewahrungsbehälters (1) erstreckenden Versteifungsring (12) und im als umlaufende Bördelung ausgebildeten Behälterverschluß (4) erstreckt und beim Öffnen der Bördelung in Richtung zum Düsenboden (10) hin aufweitbar ist.

17. Vorrichtung nach einem der Ansprüche 1 bis 16, dadurch gekennzeichnet, daß der Düsenboden (10) und das Deckelteil (5) beim Aufblasen des Airbags am Versteifungsring (12) abgestützt sind.

18. Vorrichtung nach einem der Ansprüche 1 bis 17, dadurch gekennzeichnet, daß der Treibgasgenerator (2) einen durch das gezündete Treibgas radial nach außen expandierbaren Gehäusemantel (14) aufweist, der an die Ringinnenwand (13) des ringförmigen Aufbewahrungsbehälters (1) andrückbar ist.

19. Vorrichtung nach einem der Ansprüche 1 bis 18, dadurch gekennzeichnet, daß das vom Treibgasgenerator (2) erzeugte Treibgas ferner in der Weise umgeleitet ist, daß zum Transport des Füllgases durch den geöffneten Verschluß (4) ein Druck auf das Füllgas ausgeübt wird.

20. Verfahren zum Mischen von zu entzündenden Gaskomponenten eines Füllgases für einen Airbag, dadurch gekennzeichnet, daß die zu mischenden Gaskomponenten mittels eines schwer entzündbaren Treibgases, das in einen abgeschlossenen Raum auf erhöhten Druck gebracht wird, aus getrennten Behältern in einen Mischraum gedrückt werden.

21. Verfahren nach Anspruch 20, dadurch gekennzeichnet, daß die Temperatur des schwer entzündbaren Gases zur Erzielung der Druckerhöhung erhöht wird.

22. Verfahren nach Anspruch 20 oder 21, dadurch gekennzeichnet, daß die Temperatur des Treibgases durch Zündung erhöht wird.

23. Verfahren nach einem der Ansprüche 20 bis 22, dadurch gekennzeichnet, daß durch das Treibgas mit dem erhöhten Druck Ventile zu den geschlossenen Behältern, in denen die zu mischenden Füllgaskomponenten aufbewahrt werden, geöffnet werden und daß dann Ventile von den Behältern in den Mischraum durch den erhöhten Druck geöffnet werden.

24. Verfahren nach einem der Ansprüche 20 bis 23, dadurch gekennzeichnet, daß durch den erhöhten Druck des schwer entzündbaren Treibgases der expandierte Mischraum hergestellt wird.

25. Verfahren nach einem der Ansprüche 20 bis 24, dadurch gekennzeichnet, daß ferner durch den erhöhten Druck des schwer entzündbaren Treibgases der gefaltete Airbag ausgedrückt und vorgefüllt wird.

26. Verfahren nach einem der Ansprüche 20 bis 25, dadurch gekennzeichnet, daß in einer zweiten Stufe das Füllgasgemisch im Mischraum und im gegebenenfalls vorgefüllten Airbag gezündet wird.
